# EUROPEAN PATENT APPLICATION

(11) **EP 3 348 360 A1**
(43) Date of publication of application: **18.07.2018**
(21) Application number: 16844444.6
(22) Date of filing: 08.09.2016
(51) Int. Cl.: B25J 13/02, B25J 13/06

(54) **ROBOT APPARATUS**

(30) Priority: 11.09.2015 JP 2015179659
(71) Applicant: Life Robotics Inc., Koto-ku Tokyo 135-0047 (JP)
(72) Inventor: TAKASE, Sosuke, Tokyo 135-0047 (JP); KAWAGUCHI, Masateru, Tokyo 135-0047 (JP); YOON, Woo-Keun, Tokyo 135-0047 (JP); KURIHARA, Shinji, Tokyo 135-0047 (JP)
(74) Representative: Herrero & Asociados, S.L.
(86) International application number: PCT/JP2016/076473
(87) International publication number: WO 2017/043583

(57) **Abstract**

A purpose of the present invention is to lower the level of operations expertise needed for hand movements and posture changes of a robot system and reduce the difficulty of learning operations.

A robot system includes a robot arm mechanism equipped with an end effector (3); an operating device (60) for operating a movement and a posture change of the end effector; and a control section (101) for controlling the robot arm mechanism according to the input operation carried out via the operating device, in which the operating device equips a first operating button set and a second operating button set, the first operating button set is adapted for operating translational movement in which the end effector moves in positive and negative directions along each of three orthogonal axes of the robot coordinate system with a posture of the end effector on a robot coordinate system fixed, and the second operating button set is adapted for operating posture change motion in which the end effector rotates in positive and negative directions around each of three orthogonal axes of the hand coordinate system with an origin position of a hand coordinate system of the end effector on the robot coordinate system fixed.

## Description

### [Technical Field]

An embodiment described herein relates to a robot system.

### Description of the Related Art

### [Background Art]

In recent years, environments in which a robot exists in the same space as a user have been increasing. Presumably situations in which not only a nursing care robot, but also an industrial robot is working side by side with an operator will be expanding. Some robot systems are equipped with a vertical articulated arm mechanism. The vertical articulated arm mechanism generally includes joints J1, J2, and J3 called root three axes, and joints J4, J5, and J6 called wrist three axes. For example, in a direct teaching process, by operating the six joints J1 to J6 either individually or in conjunction, a hand is moved and a hand posture is changed as desired.

In the simplest form, the hand is moved by individually driving root joints J1, J2, and J3 and the hand posture is changed by individually driving wrist joints J4, J5, and J6. Ganged control of the joints enables movement (translational movement) with the hand posture fixed and allows hand posture to be changed with the hand position fixed. Regarding translational movement and posture change operations, by selecting any of a world coordinate system, robot coordinate system, and user coordinate system as a reference coordinate system and selecting any of a wrist coordinate system, hand coordinate system (tool coordinate system), and workpiece coordinate system as an object coordinate system, the user can suitably define an operation space according to an application environment of the robot system. In the translational movement, an origin of the object coordinate system is displaced with respect to the reference coordinate system and an angle of the object coordinate system relative to the reference coordinate system is fixed. In a posture change, the object coordinate system is rotated around each of its three orthogonal axes with the origin of the object coordinate system on the reference coordinate system fixed. The reference coordinate system and object coordinate system can be defined arbitrarily, for each of the translational movement and posture change, providing very high versatility.

On the other hand, these coordinate systems have an enormous number of combinations, and actual movements and posture changes vary with the combination. A very high level of expertise is required to understand the movements and posture changes in each of the enormous number of coordinate system combinations and it is difficult to learn relationships of the movements and posture changes with the combinations of coordinate systems.

### [Summary of Invention]

### [Technical Problem]

A purpose of the present invention is to lower the level of operations expertise needed for hand movements and posture changes of a robot system and reduce the difficulty of learning operations.

### [Solution to Problem]

A robot system includes a robot arm mechanism equipped with an end effector; an operating device for operating a movement and a posture change of the end effector; and a control section for controlling the robot arm mechanism according to the input operation carried out via the operating device, in which the operating device equips a first operating button set and a second operating button set, the first operating button set is adapted for operating translational movement in which the end effector moves in positive and negative directions along each of three orthogonal axes of the robot coordinate system with a posture of the end effector on a robot coordinate system fixed, and the second operating button set is adapted for operating posture change motion in which the end effector rotates in positive and negative directions around each of three orthogonal axes of the hand coordinate system with an origin position of a hand coordinate system of the end effector on the robot coordinate system fixed.

### [Brief Description of Drawing(s)]

[Figure 1] FIG. 1 is an external perspective view of a robot arm mechanism of a robot system according to an embodiment of the present invention;
[Figure 2] FIG. 2 is a side view illustrating an internal structure of the robot arm mechanism of FIG. 1;
[Figure 3] FIG. 3 is a diagram illustrating a configuration of the robot arm mechanism of FIG. 1 using graphic symbol representation;
[Figure 4] FIG. 4 is a block diagram illustrating a configuration of the robot system according to the present embodiment;
[Figure 5] FIG. 5 is plan view illustrating an operating panel of a second arm operating device of FIG. 4;
[Figure 6] FIG. 6 is plan view illustrating another operating panel of the second arm operating device of FIG. 4;
[Figure 7] FIG. 7 is plan view illustrating another operating panel of the second arm operating device of FIG. 4; and
[Figure 8] FIG. 8 is plan view illustrating an operating panel of a robot hand operating device of FIG. 4.

### [Description of Embodiments]

A robot system according to an embodiment of the present invention is described below with reference to the drawings. In the following description, components having substantially same functions and configurations are denoted by the same reference numerals, and redundant description thereof will be omitted unless necessary.

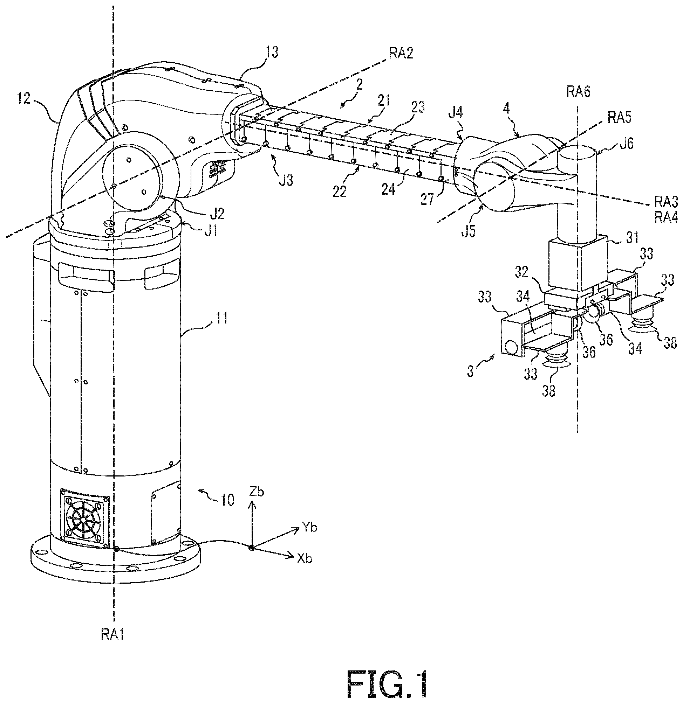

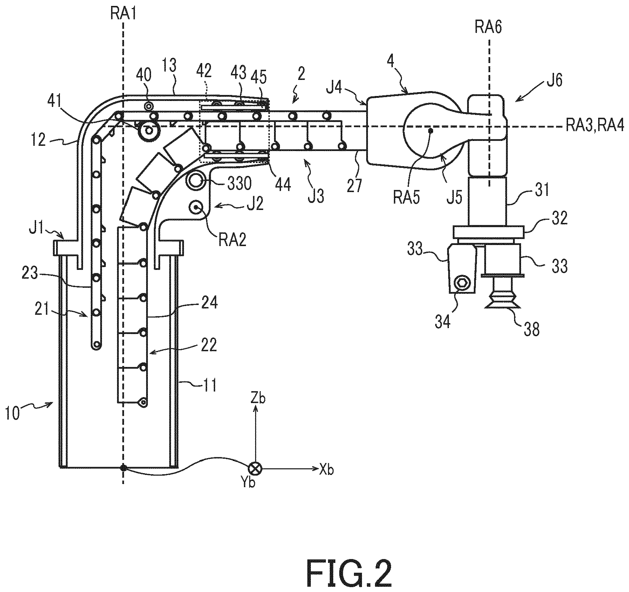

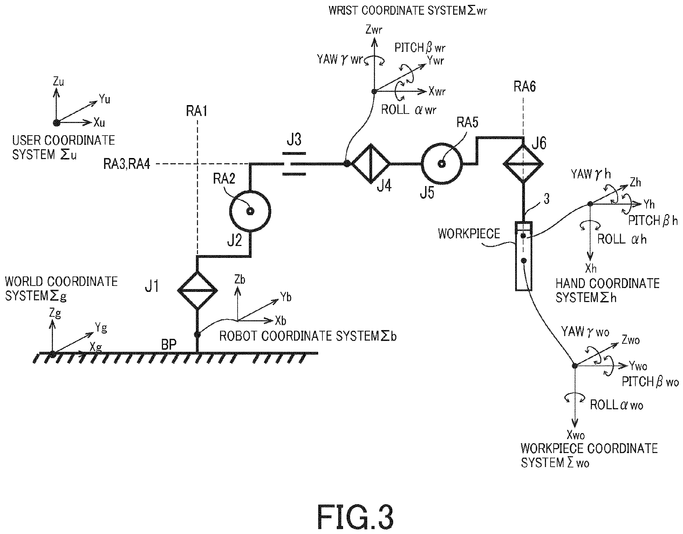

FIG. 1 is an external perspective view of a robot system according to the present embodiment. FIG. 2 is a perspective view illustrating an internal structure of the robot arm mechanism of FIG. 1. FIG. 3 is a diagram showing the robot arm mechanism of FIG. 1 using graphic symbol representation.

The robot arm mechanism has a plurality of--six herein--joints J1, J2, J3, J4, J5, and J6. The plurality of joints J1, J2, J3, J4, J5, and J6 are arranged in order from a base 10. Generally, first, second, and third joints J1, J2, and J3 are called root three axes, and fourth, fifth, and sixth joints J4, J5, and J6 are called wrist three axes and adapted to change a posture of a hand device 3. In the robot arm mechanism, three degrees of positional freedom are realized by the first joint J1, second joint J2, and third joint J3 making up the root three axes. Also, three degrees of postural freedom are realized by the fourth joint J4, fifth joint J5, and sixth joint J6 making up the wrist three axes. A wrist section 4 includes the fourth, fifth, and sixth joints J4, J5, and J6. At least one of the joints J1, J2, and J3 making up the root three axes is a linear extension and retraction joint. Here, the third joint J3 is configured to be a linear extension and retraction joint, and in particular, a joint with a relatively long linear extension and retraction distance. An arm section 2 is an extension and retraction portion of a linear extension and retraction joint J3 (third joint J3).

The first joint J1 is a torsion joint that turns on a first axis of rotation RA1 supported, for example, perpendicularly to a base plane. The second joint J2 is a bending joint that turns on a second axis of rotation RA2 perpendicular to the first axis of rotation RA1. The third joint J3 is a joint whereby the arm section 2 extends and retracts linearly along a third axis (axis of movement) RA3 placed perpendicularly to the second axis of rotation RA2.

The fourth joint J4 is a torsion joint that turns on the fourth axis of rotation RA4. The fourth axis of rotation RA4 substantially coincides with the third axis of movement RA3 when a seventh joint J7 described later is not rotating, i.e., when the entire arm section 2 is in a linear state. The fifth joint J5 is a bending joint that turns on the fifth axis of rotation RA5 orthogonal to the fourth axis of rotation RA4. The sixth joint J6 is a bending joint that turns on the sixth axis of rotation RA6 orthogonal to the fourth axis of rotation RA4 and perpendicular to the fifth axis of rotation RA5.

An arm support section (first support section) 11 forming the base 10 has a cylindrical hollow structure formed around the first axis of rotation RA1 of the first joint J1. The first joint J1 is mounted on a fixed base (not shown). When the first joint J1 rotates, the arm section 2 swings left and right along with axial rotation of the first support section 11. Note that the first support section 11 may be fixed on a ground plane. In that case, the arm section 2 is structured to turn independently of the first support section 11. A second support section 12 is connected to upper part of the first support section 11.

The second support section 12 has a hollow structure continuous with the first support section 11. One end of the second support section 12 is attached to a rotating section of the first joint J1. The other end of the second support section 12 is open, and a third support section 13 is fitted therein pivotally on the second axis of rotation RA2 of the second joint J2. The third support section 13 has a hollow structure made up of a scaly sheath communicated with the first support section 11 and second support section. In accordance with bending rotation of the second joint J2, rear part of the third support section 13 is accommodated in and sent out from the second support section 12. Rear part of the arm section 2, which constitutes the linear extension and retraction joint J3 (third joint J3)of the robot arm mechanism, is housed inside the continuous hollow structure of the first support section 11 and second support section 12 by retraction thereof.

Lower part of a rear end of the third support section 13 is then fitted in lower part of an open end of the second support section 12 pivotally on the second axis of rotation RA2. Consequently, the second joint J2 is configured to be a bending joint that turns on the axis of rotation RA2. When the second joint J2 pivots, the arm section 2 pivots vertically, i.e., pivots up and down, on the second axis of rotation RA2.

The fourth joint J4 is a torsion joint having the fourth axis of rotation RA4 typically put in contact with the center axis of the arm section 2 along the extension and retraction direction of the arm section 2, that is, the third axis of movement RA3 of the third joint J3. When the fourth joint J4 rotates, the wrist section 4 and the hand device 3 attached to the wrist section 4 rotates around the fourth axis of rotation RA4. The fifth joint J5 is a bending joint having the fifth axis of rotation RA5 orthogonal to the fourth axis of rotation RA4 of the fourth joint J4. When the fifth joint J5 rotates, the hand device 3 pivots up and down (vertically around the fifth axis of rotation RA5) from the fifth joint J5 to its tip together with the hand device 3. The sixth joint J6 is a bending joint having the sixth axis of rotation RA6 orthogonal to the fourth axis of rotation RA4 of the fourth joint J4 and perpendicular to the fifth axis of rotation RA5 of the fifth joint J5. When the sixth joint J6 rotates, the hand device 3 swings left and right.

As shown in FIG. 3, the axis of rotation RA1 is placed perpendicularly to a reference plane BP of a base on which the fixed section of the first joint J1 is installed. The second joint J2 is configured to be a bending joint around the axis of rotation RA2. The axis of rotation RA2 of the second joint J2 is installed in parallel to a Yb axis. The axis of rotation RA2 of the second joint J2 is installed in an orientation perpendicular to the axis of rotation RA1 of the first joint J1. Furthermore, the second joint J2 is offset from the first joint J1 in two directions: a direction of the first axis of rotation RA1 (Zb-axis direction) and an Xb-axis direction perpendicular to the first axis of rotation RA1. The second support section 12 is mounted on the first support section 11 such that the second joint J2 will be offset from the first joint J1 in the above-mentioned two directions. A virtual arm rod portion (link portion) adapted to connect the second joint J2 to the first joint J1 has a crank shape formed by combining two hook-shaped bodies whose tips are bent at a right angle. The virtual arm rod portion is made up of the first and second support sections 11 and 12 having a hollow structure.

The third joint J3 is configured to be a linear extension and retraction joint around the axis of movement RA3. The axis of movement RA3 of the third joint J3 is installed in an orientation perpendicular to the axis of rotation RA2 of the second joint J2. When a rotation angle of the second joint J2 is 0 degrees, i.e., when a hoisting angle of the arm section 2 is 0 degrees, and the arm section 2 is in a horizontal reference posture, the axis of movement RA3 of the third joint J3 is installed in an orientation perpendicular the axis of rotation RA1 of the first joint J1 as well as to the axis of rotation RA2 of the second joint J2. On a space coordinate system, the axis of movement RA3 of the third joint J3 is installed in parallel to an Xb axis perpendicular to the Yb axis and an Zb axis. Furthermore, the third joint J3 is offset from the second joint J2 in two directions: the direction of the axis of rotation RA2 (Xb-axis direction) and the Zb-axis direction orthogonal to the axis of movement RA3. The third support section 13 is mounted on the second support section 12 such that the third joint J3 is offset from the second joint J2 in the two directions. A virtual arm rod portion (link portion) adapted to connect the third joint J3 to the second joint J2 has a hook-shaped body whose tip is bent at a right angle. The virtual arm rod portion is made up of the second and third support sections 12 and 13.

The fourth joint J4 is configured to be a torsion joint around the axis of rotation RA4. The axis of rotation RA4 of the fourth joint J4 is placed in such a way as to substantially coincide with the axis of movement RA3 of the third joint J3. The fifth joint J5 is configured to be a bending joint around the axis of rotation RA5. The axis of rotation RA5 of the fifth joint J5 is placed in such a way as to be substantially orthogonal to the axis of movement RA3 of the third joint J3 and the axis of rotation RA4 of the fourth joint J4. The sixth joint J6 is configured to be a torsion joint around the axis of rotation RA6. The axis of rotation RA6 of the sixth joint J6 is placed in such a way as to be substantially orthogonal to the axis of rotation RA4 of the fourth joint J4 and the axis of rotation RA5 of the fifth joint J5. The sixth joint J6 is installed to swing the hand device 3 left and right, where the hand device 3 serves as an end effector. Note that the sixth joint J6 may be configured to be a bending joint, of which the axis of rotation RA6 is substantially orthogonal to the axis of rotation RA4 of the fourth joint J4 and the axis of rotation RA5 of the fifth joint J5.

In this way, by changing one bending joint out of the root three axes of the plurality of joints J1 to J6 to a linear extension and retraction joint, by offsetting the second joint J2 from the first joint J1 in two directions, and by offsetting the third joint J3 from the second joint J2 in two directions, the robot arm mechanism of the robot system according to the present embodiment solves singular postures in structural terms.

As described above, the hand device 3 attached to an adaptor of the wrist section 4 is moved to an arbitrary position by the first, second, and third joints J1, J2, and J3, and placed in an arbitrary posture by the fourth, fifth, and sixth joints J4, J5, and J6. In particular, length of an extension and retraction distance of the arm section 2 of the third joint J3 allows the hand device 3 to reach an object in a wide range from a proximity position to a remote position of the base 10. The third joint J3 is characterized by the linear extension and retraction motion realized by the linear extension and retraction mechanism constituting the third joint J3 and by the length of the extension and retraction distance thereof.

A structure in which the hand device 3 includes a gripping mechanism used to pick up a workpiece by gripping and a sucking mechanism used to pick up another workpiece by sucking will be described as an example. The hand device 3 may be structured to include another mechanism having another function. The hand device 3 includes a hand body 31. The hand body 31 has the shape of a prism and includes a mount on an upper end face thereof. The hand device 3 is attached to the adaptor (joint J6) of the wrist section 4 via the mount. An air chuck box 32 is attached to an underside of the hand body 31. The air chuck box 32 includes a pair of sliders 33. The pair of sliders 33 are supported in such a way as to be able to move close to and away from the air chuck box 32. The air chuck box 32 includes an air cylinder (not shown). The air cylinder is connected with a pair of air tubes. Each of the pair of air tubes is connected to a compression air pump (not shown). The pair of air tubes are connected with a pair of solenoid valves (not shown). The two solenoid valves are controlled by an open/close solenoid valve driver 301 (described later) to open and close in opposite phase to each other. When a first of the solenoid valves is opened and a second of the solenoid valves is closed, the pair of sliders 33 are moved in such a direction as to get close to each other. When the first solenoid valve is closed and the second solenoid valve is opened, the pair of sliders 33 are moved in such a direction as to get away from each other. An approaching/separating direction of the pair of sliders 33 is referred to as a sliding direction.

A pair of grippers 34 are attached to the pair of sliders 33. The grippers 34 have a substantially columnar shape in appearance. Cylindrical pads (suction pads) 36 are attached to tips of the grippers 34. The pair of grippers 34 are connected with a pair of air tubes. Each of the pair of air tubes is connected to the air pump described earlier. Pipe routes are formed in the grippers 34, running from connection ports for the air tubes to the tips. This secures pipe routes from the air pumps to the tips of the grippers 34. The air pump may be either a compression type or vacuum type, and a compression pump is described herein. Two systems of pipe routes--negative pressure routes and positive pressure routes--are connected between the pads 36 of the grippers 34 and the air pumps. The negative pressure route is connected with a negative pressure valve and ejector. The positive pressure route is connected with a positive pressure valve. The negative pressure valve and positive pressure valve are solenoid valves. The negative pressure valve and positive pressure valve are controlled by a horizontal suction solenoid valve driver 302 (described later) to open and close in opposite phase to each other.

When the negative pressure valve is open and the positive pressure valve is closed, the negative pressure route is secured. When the negative pressure route is secured, compressed air produced by the air pump is supplied to the ejector through the negative pressure valve. The ejector includes an inlet port, a nozzle, and an exhaust port. Rear part of the pad 36 is connected to the inlet port. The compressed air supplied to the ejector is jetted out through the nozzle, and discharged through the exhaust port as a high-velocity airflow. Then, internal pressure in an ejector chamber falls, causing air to be taken in through the inlet port, and the air taken in through the inlet port is discharged through the exhaust port together with the compressed air. Consequently, negative pressure develops on the pad 36 connected to the inlet port. When the positive pressure valve is opened and the negative pressure valve is closed, the positive pressure route is secured. When the positive pressure route is secured, compressed air produced by the air pump is supplied directly to the pad 36. Consequently, positive pressure develops on the pad 36.

A pair of suction pads 38 are attached to the pair of sliders 33. The suction pads 38 are formed of an elastic material such as a silicone resin into cylindrical bodies. Tip surfaces of the suction pads 38 are suction surfaces adapted to suck a workpiece. A trunk of each suction pad 38 is formed into a bellows shape. The suction pads 38 suck the workpiece in an axial direction of the cylindrical bodies. The suction pads 38 are attached to the sliders 33 such that the suction direction will be perpendicular to the sliding direction. The pair of suction pads 38 are connected with a pair of air tubes. Each of the pair of air tubes is connected to the air pump described earlier. Two systems of pipe routes--negative pressure routes and positive pressure routes--are connected between the suction pads 38 and the air pumps. The negative pressure route is connected with a negative pressure valve and ejector. The positive pressure route is connected with a positive pressure valve. The negative pressure valve and positive pressure valve are solenoid valves. The negative pressure valve and positive pressure valve are controlled by a vertical suction solenoid valve driver 303 (described later) to open and close in opposite phase to each other. When the negative pressure valve is open and the positive pressure valve is closed, the negative pressure route is secured. When the negative pressure route is secured, negative pressure develops on the suction pad 38. When the positive pressure valve is open and the negative pressure valve is closed, the positive pressure route is secured. When the positive pressure route is secured, positive pressure develops on the suction pad 38.

As shown in detail in FIG. 2, the linear extension and retraction mechanism includes the arm section 2 and an ejection section 32. The arm section 2 includes a first connection piece string 21 and a second connection piece string 22. The first connection piece string 21 is made up of a plurality of first connection pieces 23. Each of the first connection pieces 23 is formed into a substantially flat plate shape. Each pair of successive first connection pieces 23 are bendably coupled together at their ends by a pin, forming a string. The first connection piece string 21 can freely bend inward and outward.

The second connection piece string 22 is made up of a plurality of second connection pieces 24. Each of the second connection pieces 24 is configured as a short trough-like body U-shaped in transverse section. Each pair of successive second connection pieces 24 are bendably coupled together at their ends on bottom faces by a pin, forming a string. The second connection piece string 22 can be bend inward. Each second connection piece 24 has a U-shaped cross section, and thus the second connection piece string 22 does not bend outward with side plates of adjacent second connection pieces 24 hitting each other. Note that those surfaces of the first and second connection pieces 23 and 24 which face the second axis of rotation RA2 will be referred to as inner surfaces and surfaces on an opposite side will be referred to as outer surfaces. The leading first connection piece 23 of the first connection piece string 21 and the leading second connection piece 24 of the second connection piece string 22 are connected with each other by a joining piece 27. For example, the joining piece 27 has a combined shape of the second connection piece 24 and the first connection piece 23.

The ejection section 42 is made up of a plurality of upper rollers 43 and a plurality of lower rollers 44, which are supported by a frame 45 of a rectangular tubular shape. For example, the plurality of upper rollers 43 are arranged along a center axis of the arm at intervals substantially equivalent to the length of the first connection piece 23. Similarly, the plurality of lower rollers 44 are arranged along the center axis of the arm at intervals substantially equivalent to the length of the second connection piece 24. Behind the ejection section 42, a guide roller 40 and a drive gear 41 are provided, facing each other across the first connection piece string 21. The drive gear 41 is connected to a stepping motor 330 via a speed reducer (not shown). On an inner surface of each first connection piece 23, a linear gear is formed along a coupling direction. When the plurality of first connection pieces 23 are lined up linearly, the respective linear gears are connected linearly, making up a long linear gear. The drive gear 41 is meshed with the unified linear gear. The linearly connected linear gears make up a rack-and-pinion mechanism in conjunction with the drive gear 41.

When the arm is extended, a motor 330 operates and a drive gear 41 rotates forward, causing the first connection piece string 21 to be guided by the guide roller 40 to between the upper rollers 43 and the lower rollers 44 in a posture parallel to the center axis of the arm. Along with the movement of the first connection piece string 21, the second connection piece string 22 is guided by a guide rail (not shown) placed behind the ejection section 42, to between the upper rollers 43 and the lower rollers 44. The first and second connection piece strings 21 and 22 guided to between the upper rollers 43 and the lower rollers 44 are pressed against each other. Consequently, a columnar body is formed by the first and second connection piece strings 21 and 22. The ejection section 42 joins together the first and second connection piece strings 21 and 22, thereby forming the columnar body and supports the columnar body from above, below, left, and right. As the columnar body resulting from the joining together of the first and second connection piece strings 21 and 22 is held firmly by the ejection section 42, the first and second connection piece strings 21 and 22 are kept joined. When the first and second connection piece strings 21 and 22 are kept joined, the first and second connection piece strings 21 and 22 constrain each other from bending. Consequently, the first and second connection piece strings 21 and 22 make up the columnar body having a certain degree of rigidity. The columnar body is a columnar rod body made up of the first connection piece string 21 joined to the second connection piece string 22. The columnar body is generally formed into a tubular body having any of various cross sectional shapes by a combination of the second connection pieces 24 and the first connection pieces 23. The tubular body is defined as a shape surrounded by a top plate, a bottom plate, and side plates on top, bottom, and left and right sides, respectively, with a front end portion and a rear end portion being left open. The columnar body resulting from the joining together of the first and second connection piece strings 21 and 22 is sent outward through an opening in the third support section 13 linearly along the third axis of movement RA3 with the joining piece 27 serving as a leading piece.

When the arm is retracted, the motor 330 operates and the drive gear 41 rotates backward, causing the first connection piece string 21 engaged with the drive gear 41 to be pulled back into the first support section 11. Along with the movement of the first connection piece string 21, the columnar body is pulled back into the third support section 13. The columnar body pulled back is separated at a location behind the ejection section 42. For example, the first connection piece string 21 making up the columnar body is sandwiched between the guide roller 40 and the drive gear 41 while the second connection piece string 22 making up the columnar body is pulled downward, for example, by gravity, and consequently, the second connection piece string 22 and the first connection piece string 21 are separated from each other. The separated first and second connection piece strings 21 and 22 are returned to a bendable state. For storing, the second connection piece string 22 is transported from the ejection section 42 by being bent inward in a storing section inside the first section 11 (base 10) and the first connection piece string 21 is also transported by being bent in the same direction (inward) as the second connection piece string 22. The first connection piece string 21 is stored substantially in parallel to the second connection piece string 22.

As is well known, a large number of coordinate systems are handled in the field of robotics. A world coordinate system ∑g, which is also known as an observation coordinate system, is a three-axis orthogonal coordinate system (Xg, Yg, Zg) established on the floor of the factory in which the robot system is installed, and the robot system performs work with respect to the world coordinate system ∑g. A user coordinate system ∑u is a three-axis orthogonal coordinate system (Xu, Yu, Zu) defined with respect to the user who operates the robot system. A robot coordinate system ∑b is a coordinate system defined with respect to the base 10 of the robot system and is here a three-axis orthogonal coordinate system whose origin is at an arbitrary position on the axis of rotation RA1 of the first joint J1. For example, in the robot coordinate system ∑b, the origin is defined on the axis of rotation RA1 in a ground plane of the base 10, the axis of rotation RA1 is defined as the Zb axis (vertical axis), and two axes orthogonal to the Zb axis are defined as the Xb axis and Yb axis. The Xb axis is a longitudinal axis of the robot system and the Yb axis is a lateral axis.

A wrist coordinate system ∑wr is a three-axis orthogonal coordinate system defined with respect to the wrist section 4 of the robot system. For example, with an origin set at a wrist reference point established at an arbitrary position on the axis of rotation RA4 of the fourth joint J4, the axis of rotation RA4 of the fourth joint J4 is defined as an Xwr axis (longitudinal axis), an axis parallel to the axis of rotation RA5 of the fifth joint J5 is defined as a Ywr axis (lateral axis), and an axis orthogonal to the Xwr axis and Ywr axis is defined as a Zwr axis (vertical axis). A wrist posture is given as rotation angles around three orthogonal axes of the wrist coordinate system ∑wr: a rotation angle (roll angle) αwr around the Xwr axis, a rotation angle (pitch angle) βwr around the Ywr axis, and a rotation angle (yaw angle) γwr around the Zwr axis.

A hand coordinate system ∑h is a three-axis orthogonal coordinate system defined with respect to the hand device 3 of the robot system. With an origin set at a center position (referred to as a hand reference point) between the pair of pads 36 of the hand device 3, an axis parallel to a pivot axis RA6 of the sixth joint J6 is defined as an Xh axis (longitudinal axis), and two axes orthogonal to the Xh axis are defined as a Yh axis and a Zh axis. The Yh axis is a lateral axis of the hand device 3 and the Zh axis is a vertical axis of the hand device 3. The hand posture is given as rotation angles around three orthogonal axes of the hand coordinate system ∑h: a rotation angle (roll angle) αh around the Xh axis, a rotation angle (pitch angle) βh around the Yh axis, and a rotation angle (yaw angle) γh around the Zh axis.

A workpiece coordinate system ∑wo is a three-axis orthogonal coordinate system defined with respect to the workpiece handled by the hand device 3. For example, in the workpiece coordinate system ∑wo, with an origin set at a center-of-gravity position (referred to as a workpiece reference point) of the workpiece, an axis parallel to the pivot axis RA6 of the sixth joint J6 is defined as an Xwo axis (longitudinal axis), and two axes orthogonal to the Xwo axis are defined as a Ywo axis and a Zwo axis. The Ywo axis is a lateral axis of the workpiece and the Zwo axis is a vertical axis of the workpiece. A workpiece posture is given as rotation angles around three orthogonal axes of the workpiece coordinate system ∑wo: a rotation angle (roll angle) αwo around the Xwo axis, a rotation angle (pitch angle) βwo around the Ywo axis, and a rotation angle (yaw angle) γwo around the Zwo axis.

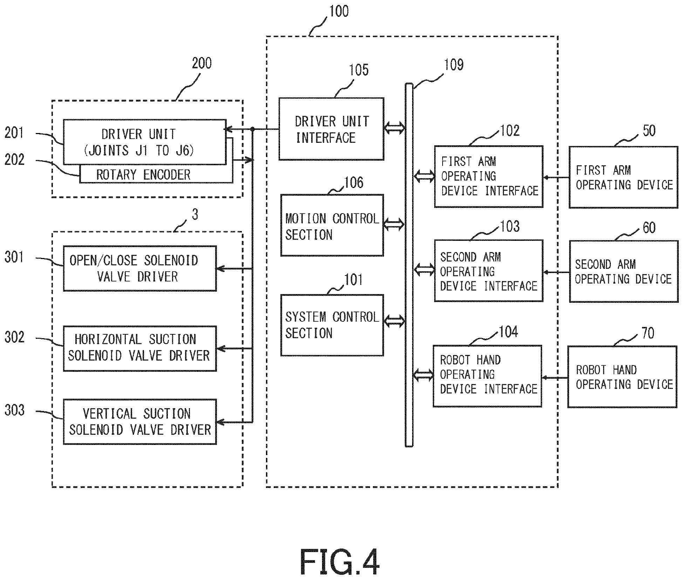

FIG. 4 is a block diagram illustrating a configuration of the robot system according to the present embodiment. The robot system includes an articulated robot arm mechanism 200 and the hand device 3. Under the control of an motion control device 100, the joint J3 of the articulated robot arm mechanism 200 extends and retracts, rotating the joints J1, J2, and J4 to J6, and thereby causing the hand device 3 to operate.

The articulated robot arm mechanism 200 includes the plurality of joints J1, J2, J3, J4, J5, and J6. Each of the plurality of joints J1 to J6 is equipped with a stepping motor. Rotation of the stepping motors is controlled by driver units 201. The driver units 201 sends pulse signals to the stepping motors based on position command values from the motion control device 100. Consequently, the stepping motors rotate to positions according to the command values. Drive shafts of the stepping motors are connected with a rotary encoder 202 adapted to output a pulse every predetermined rotation angle. Encoder pulses outputted from the rotary encoder 202 are subjected to addition and subtraction by counters (not shown) of the driver units 201. Count values of the encoder pulses calculated by the counter are inputted to the motion control device 100 via driver unit interfaces 105.

The hand device 3 includes the open/close solenoid valve driver 301, the horizontal suction solenoid valve driver 302, and the vertical suction solenoid valve driver 303. The open/close solenoid valve driver 301 opens and closes a solenoid valve of an air chuck structure 32 in response to an open/close command for the grippers 34 entered via a robot hand operating device 70 described later. Consequently, the pair of sliders 33 move in the approaching/separating direction. In response to a suction motion ON command for the pads 36 entered via the robot hand operating device 70 described later, the horizontal suction solenoid valve driver 302 closes positive pressure valves interposed between the pads 36 of the grippers 34 and the air pumps and opens negative pressure valves to a degree of opening corresponding to suction strength set by the operator via the robot hand operating device 70. In response to a suction motion OFF command for the pads 36 entered via the robot hand operating device 70 described later, the horizontal suction solenoid valve driver 302 opens the positive pressure valves interposed between the pads 36 of the grippers 34 and the air pumps and closes the negative pressure valves. In response to a suction motion ON command for the suction pads 38 entered via the robot hand operating device 70 described later, the vertical suction solenoid valve driver 303 closes positive pressure valves interposed between the suction pads 38 and the air pumps and opens negative pressure valves to a degree of opening corresponding to suction strength set by the operator via the robot hand operating device 70. In response to a suction motion OFF command for the suction pads 38 entered via the robot hand operating device 70 described later, the vertical suction solenoid valve driver 303 opens the positive pressure valves interposed between the suction pads 38 and the air pumps and closes the negative pressure valves.

Components of the motion control device 100 are interconnected around a system control section 101 via a control/data bus 109. The motion control device 100 is connected with two systems of arm operating devices 50 and 60 via a first arm operating device interface 102 and a second arm operating device interface 103, respectively, to allow the operator to manually change the point-of-fixation position and posture of the robot system. Also, the motion control device 100 is connected with the robot hand operating device 70 via a robot hand operating device interface 104 to allow the operator to operate the hand device 3.

Based on movement instructions and rotation instructions entered by the user for the robot system via the first arm operating device 50 or the second arm operating device 60, a motion control section 106 generates position command values for the respective joints J1 to J6 on every control cycle Δt. The position command values generated by the motion control section 106 are transmitted to the respective driver units 201 of the joints J1 to J6 via the driver unit interfaces 105 on every control cycle Δt.

For convenience of explanation, it is assumed here that the robot coordinate system ∑b is a reference coordinate system and that the hand coordinate system ∑h is an object coordinate system. Based on output pulses of the encoder 202, the motion control section 106 calculates joint variables (θ1, θ2, d3, θ4, θ5, θ6) of the joints J1, J2, J3, J4, J5, and J6. The joint variables include six variables: joint angles of the joints J1, J2, J4, J5 and J6 and extension distance of the joint J3. Based on the calculated joint variables (θ1, θ2, d3, θ4, θ5, θ6), the motion control section 106 calculates the hand posture as well as the current position of the origin (hand reference point) of the hand coordinate system ∑h on the robot coordinate system ∑b using forward kinematics.

If translational movement is specified via the first arm operating device 50 or the second arm operating device 60, based on the current position of the hand reference point and the final target position entered via the first or second arm operating device, the motion control section 106 calculates the target position on every control cycle Δt using a predetermined trajectory calculation formula. By maintaining the hand posture taken at the start of translational movement, the motion control section 106 calculates the joint variables (θ1, θ2, d3, θ4, θ5, θ6) for use to move the hand reference point from the current position to the target position and generates position command values according to the calculated joint variables.

If a hand posture change is specified via the first arm operating device 50 or the second arm operating device 60, based on the current hand posture and the final target posture entered via the first or second arm operating device, the motion control section 106 calculates the target posture on every control cycle Δt using rotation matrices around the Xh axis, Yh axis, and Zh axis of the hand coordinate system ∑h. By maintaining the position of the hand reference point established at the start of translational movement, the motion control section 106 calculates the joint variables (θ1, θ2, d3, θ4, θ5, θ6) for use to change the hand posture from the current posture to the target posture and generates position command values according to the calculated joint variables.

Note that even if another coordinate system (world coordinate system / user coordinate system) is selected as the reference coordinate system or another coordinate system (wrist coordinate system / workpiece coordinate system) is selected as the object coordinate system or other coordinate systems are selected both for the reference coordinate system and object coordinate system, the motion control section 106 generates position command values on every control cycle Δt based on input from the arm operating device 50 or 60, as with the case described above. Therefore, the motion control section 106 holds data on a plurality of homogeneous transformation matrices defining a relationship between a reference coordinate system (world coordinate system / user coordinate system / robot coordinate system) and an object coordinate system (wrist coordinate system / hand coordinate system / workpiece coordinate system), data on rotation matrices around the Xwr axis, Ywr axis, and Zwr axis of the hand coordinate system ∑wr, and data on rotation matrices around the Xwo axis, Ywo axis, and Zwo axis of the workpiece coordinate system ∑wo.

The robot system according to the present embodiment includes two systems of arm operating devices 50 and 60 to operate the robot arm mechanism. The first arm operating device 50 is a versatile operating device suitable for use mainly by specialists required to have expertise covering all or most moving and rotating motions that can be provided by the robot system according to the present embodiment. The second arm operating device 60 has low versatility, but allows the operator to attain a high level of proficiency in operations by fixing associations between operating buttons and limited ones of the moving and rotating motions that can be provided by the robot system according to the present embodiment. For example, an operator skilled in the operation of the robot arm mechanism can efficiently operate the robot arm mechanism by switching between the reference coordinate system and object coordinate system using the first arm operating device 50. An operator unskilled in the operation of the robot arm mechanism, having a low level of proficiency can easily operate the robot arm mechanism using the second arm operating device 60.

The first arm operating device 50 is equipped with a plurality of buttons covering the moving and rotating motions that can be provided by the robot system according to the present embodiment. The robot system according to the present embodiment provides the following moving and rotating motions.

### (1) Translational movement

The translational movement generally refers to a movement whereby the position of the origin of the object coordinate system relative to the reference coordinate system changes continuously by maintaining angular differences (posture) among the axes of the object coordinate system on the reference coordinate system, but refers herein to a only movement whereby the origin of the object coordinate system changes its coordinate on any one of the axes of the reference coordinate system. As the reference coordinate system, one of the world coordinate system ∑g, the user coordinate system ∑u, and the robot coordinate system ∑b is selected by the user. As the object coordinate system, one of the wrist coordinate system ∑wr, the hand coordinate system ∑h, and the workpiece coordinate system ∑wo is selected by the user. It is assumed that, for example, the robot coordinate system ∑b is selected as the reference coordinate system and the hand coordinate system ∑h is selected as the object coordinate system. In this case, once a translational movement operation is started, the hand is moved along all the three orthogonal axes of the robot coordinate system ∑b by maintaining the hand posture taken at the start of the translational movement operation on the robot coordinate system ∑b. Note that if the wrist coordinate system ∑wr is selected as the object coordinate system, the wrist is moved along any one of the three orthogonal axes of the reference coordinate system by maintaining the wrist posture on the reference coordinate system. Also, if the workpiece coordinate system ∑wo is selected as the object coordinate system, the workpiece is moved along all the three orthogonal axes of the reference coordinate system by maintaining the workpiece posture on the reference coordinate system.

### (2) Mixed motion of translational movements

The mixed motion of translational movements involves translational movement along one of the three orthogonal axes of the reference coordinate system plus translational movement along one or two of the remaining axes.

### (3) Wrist posture change

The wrist posture change means a motion whereby a wrist posture is changed by rotating the wrist coordinate system ∑wr around its Xwr axis (roll αwr), Ywr axis (pitch βwr), and Zwr axis (yaw γwr) on the reference coordinate system with the origin of the wrist coordinate system ∑wr fixed on the reference coordinate system. The posture change focusing on the wrist is made when the wrist coordinate system ∑wr is selected as the object coordinate system.

### (4) Hand posture change

The hand posture change means a motion whereby a hand posture is changed by rotating the hand coordinate system ∑h around its Xh axis (roll αh), Yh axis (pitch βh), and Zh axis (yaw γh) on the reference coordinate system with the origin of the hand coordinate system ∑h fixed on the reference coordinate system. The posture change focusing on the hand is made when the hand coordinate system ∑h is selected as the object coordinate system.

### (5) Workpiece posture change

The workpiece posture change means a motion whereby a workpiece posture is changed by rotating the workpiece coordinate system ∑wo around its Xwo axis (roll αwo), Ywo axis (pitch βwo), and Zh axis (yaw γwo) on the reference coordinate system with the origin of the workpiece coordinate system ∑wo fixed on the reference coordinate system. The posture change focusing on the workpiece is made when the workpiece coordinate system ∑wo is selected as the object coordinate system.

### (6) Rotating motion around each axis of rotation

The rotating motion around each axis of rotation means a motion whereby the plurality of joints J1 to J6 rotate individually in positive and negative directions around the respective axes of rotation RA1 to RA6 regardless of the reference coordinate system or the object coordinate system.

The first arm operating device 50 is equipped with operating buttons for use by the user to specify any of the various motions described above. The first arm operating device 50 includes a button for use by the user to arbitrarily set one of the world coordinate system ∑g, the user coordinate system ∑u, and the robot coordinate system ∑b as the reference coordinate system for translational movement, and a button for use by the user to arbitrarily set one of the wrist coordinate system ∑wr, the hand coordinate system ∑h, and the workpiece coordinate system ∑wo as the object coordinate system described above. The first arm operating device 50 includes a button for use by the user to arbitrarily set one of the wrist coordinate system ∑wr, the hand coordinate system ∑h, and the workpiece coordinate system ∑wo as the object coordinate system for posture change.

Also, the first arm operating device 50 is equipped with six operating buttons for use to specify translational movement of a point of fixation (origin) of the object coordinate system selected above. Each of the six operating buttons for use to specify translational movement is associated with one of combinations of the three orthogonal axes of the reference coordinate system with respect to the axis of movement and the positive and negative directions with respect to the moving direction.

Furthermore, the first arm operating device 50 is equipped with six operating buttons for use to specify posture change. Each of the six operating buttons for use to specify posture change is associated with one of combinations of the three orthogonal axes of the object coordinate system with respect to the axis of rotation and the positive and negative directions with respect to the rotation direction.

The first arm operating device 50 is equipped with twelve operating buttons for use to individually rotate the respective joints J1 to J6 in the positive and negative directions. Aside from the operating buttons for movement and rotation, the first arm operating device 50 may be equipped with a plurality of adjustment buttons for use to adjust movement speed (rotation speed). These buttons may be configured by mounting physical buttons, by using a display equipped with a touch panel, or by a combination thereof.

The second arm operating device 60 is configured to have such weight and size as to be able to be held with one hand and is made up of a rectangular planar operating panel equipped with operating buttons for use by the user to specify limited ones of the moving and rotating motions of the robot system. The second arm operating device 60 is equipped restrictively with a plurality of buttons for use to specify only the translational movement (2) and hand posture change (4) out of the moving and rotating motions ((1) to (6) described above) that can be provided by the robot system. Regarding the translational movement, the reference coordinate system is fixed to the robot coordinate system ∑b and the object coordinate system is fixed to the hand coordinate system ∑h. Regarding the posture change, the object coordinate system is fixed to the hand coordinate system ∑h as in the case of the translational movement.

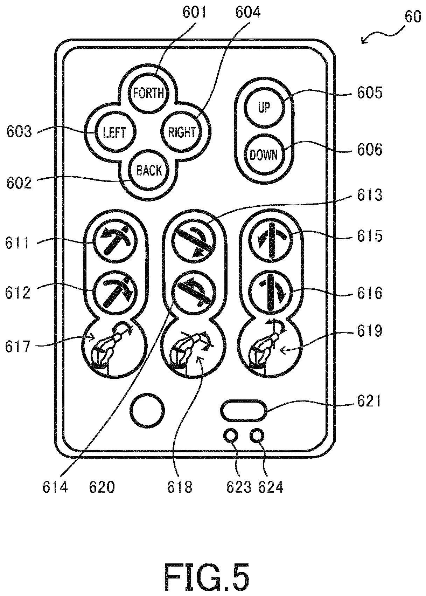

FIG. 5 is plan view illustrating an operating panel of the second arm operating device 60 of FIG. 4. The second arm operating device 60 is equipped with a first operating button set (601 to 606) for use to translate the hand on the robot coordinate system ∑b and a second operating button set (611 to 616) for use to change the hand posture.

Specifically, the first operating button set is made up of six physical push buttons 601 to 606 for use to specify positive and negative movements along the three orthogonal axes of the robot coordinate system ∑b. The six push buttons 601 to 606 are labeled with words (Up, Down, Back, Forth, Left, Right) that represent respective moving directions. The second operating button set is made up of six physical push buttons 611 to 616 for use to specify positive and negative rotations along the three orthogonal axes of the hand coordinate system ∑h. The six push buttons 611 to 616 are labeled with graphic symbols that represent respective axes and rotation directions around the axes.

The six push buttons 601 to 606 of the first operating button set are disposed on top of the second arm operating device 60. Of the six push buttons 601 to 606 of the first operating button set, two push buttons 601 and 602 for back and forth movement on the robot coordinate system ∑b are placed side by side in a longitudinal direction (lengthwise direction) of the operating panel, and two push buttons 603 and 604 for left and right movement are placed side by side in a short direction (width direction, lateral direction) of the operating panel. That is, four push buttons 601 to 604 for back, forth, left, and right movements on the robot coordinate system ∑b are disposed crosswise. Also, two push buttons 605 and 606 for up and down movement on the robot coordinate system ∑b are placed side by side in a lengthwise direction in a region on the right side of the four push buttons 601 to 604. The push buttons 601 and 602 correspond to positive and negative directions on the Xh axis of the robot coordinate system ∑b, respectively. The push buttons 603 and 604 correspond to positive and negative directions on the Yh axis of the robot coordinate system ∑b, respectively. The push buttons 605 and 606 correspond to positive and negative directions on the Zh axis of the robot coordinate system ∑b, respectively. For example, the push button 601 is labeled with a word "Forth" that indicates the moving direction. While the push button 601 is being pressed, the hand device 3 is translated in the positive direction along the Xh axis of the robot coordinate system ∑b at a predetermined speed with the posture of the hand device 3 maintained. The push button 602 is labeled with a word "Back" that indicates the moving direction. While the push button 602 is being pressed, the hand device 3 is translated in the negative direction along the Xh axis of the robot coordinate system ∑b at a predetermined speed with the posture of the hand device 3 maintained.

In lower part of the second arm operating device 60, the six push buttons 611 to 616 of the second operating button set are disposed under the first operating button set. The six push buttons 611 to 616 of the second operating button set are split up in a width direction of the second arm operating device 60 with two push buttons being provided for each of the three orthogonal axes of the hand coordinate system ∑h. The two push buttons provided for each of the three orthogonal axes are arranged in the lengthwise direction of the second arm operating device 60. Graphic symbols 617 to 619 that represent the positions of the respective axes of rotation are shown under the two push buttons provided for each of the three orthogonal axes. The operating buttons 611 and 612 correspond to (+)/(-) rotations around the Xh axis (roll αh). The operating buttons 613 and 614 correspond to (+)/(-) rotations around the Yh axis (pitch βh). The operating buttons 615 and 616 correspond to (+)/(-) rotations around the Zh axis (yaw γh) of the hand coordinate system ∑h. For example, while the push button 611 is being pressed, the hand device 3 rotates around the Xh axis indicated by the graphic symbol 617, in the direction indicated on the push button 611, at a predetermined speed.

A power button 621, an emergency stop button 620, an indicator lamp 623, and an indicator lamp 624 are disposed under the second operating button set, where the power button 621 is used to start the second arm operating device 60, the emergency stop button 620 is used to disable the second arm operating device 60, the indicator lamp 623 is used to notify the operator whether the second arm operating device 60 is ON, and the indicator lamp 624 is used to notify the operator whether any operating button is pressed.

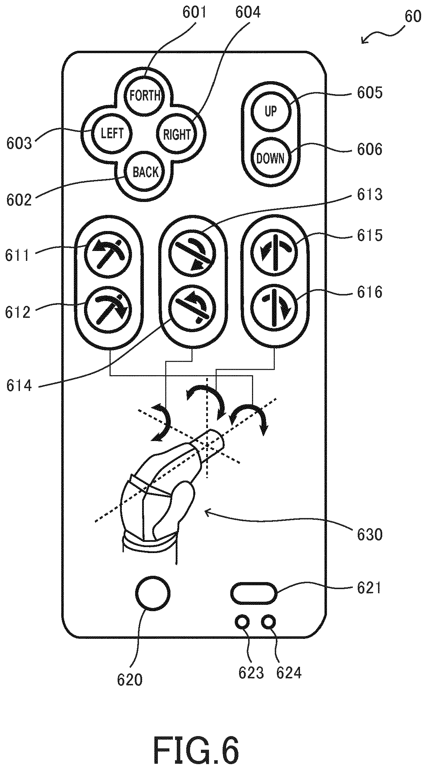

FIG. 6 is plan view illustrating another operating panel of the second arm operating device 60 of FIG. 4. As with FIG. 5, six push buttons 601 to 606 making up a first operating button set are disposed in upper part of the second arm operating device 60. Also, as with FIG. 5, six push buttons 611 to 616 making up a second operating button set are disposed under the first operating button set. As shown in FIG. 6, a graphic symbol 630 indicating orientations of the three orthogonal axes of the hand coordinate system ∑h is shown under the second operating button set. For example, the graphic symbol 630 illustrates an outline of an object to be moved, i.e., the hand of the robot system herein. The three orthogonal axes illustrated by the graphic symbol 630 are associated with pairs of push buttons for respective axes by extension lines. The power button 621, the emergency stop button 620, and indicator lamps 623 and 624 are disposed under the graphic symbol 630 indicating orientations of the three orthogonal axes of the hand coordinate system ∑h. Since the orientations of the three orthogonal axes of the hand coordinate system ∑h are indicated by the single graphic symbol 630, the operator can more easily understand positional relationships among the axes, which improves ease of rotating operation.

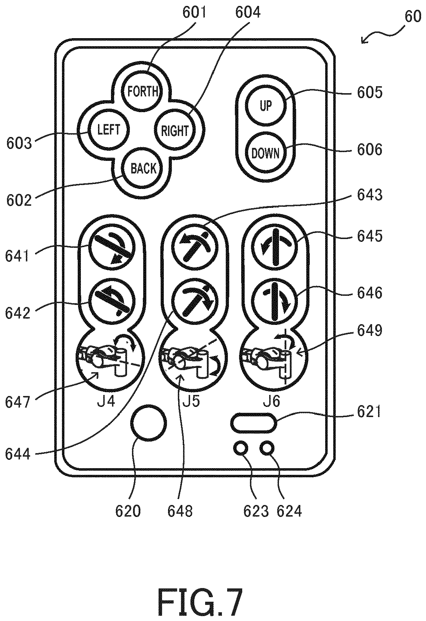

FIG. 7 is plan view illustrating another operating panel of the second arm operating device 60 of FIG. 4. Here, the second arm operating device 60 is equipped with a plurality of buttons for use by the user to specify only the translational movement (2) and the rotating motion around each axis of rotation (6) out of the moving and rotating motions ((1) to (6) described above) that can be provided by the robot system. During the translational movement, the reference coordinate system is fixed to the robot coordinate system ∑b and the object coordinate system is fixed to the hand coordinate system ∑h.

The second arm operating device 60 is equipped with a first operating button set for use to translate the hand on the robot coordinate system ∑b and a second operating button set for use to directly rotate each of the wrist three axes. As with FIG. 5, six push buttons 601 to 606 making up the first operating button set are disposed in upper part of the second arm operating device 60. The second operating button set is disposed under the first operating button set. A power button 621, an emergency stop button 620, and indicator lamps 623 and 624 are disposed under the second operating button set. In the operating panel shown in FIG. 7, the second operating button set is made up of six physical push buttons 641 to 646 for use to specify positive and negative rotations along the wrist three axes. The six push buttons 641 to 646 are labeled with graphic symbols that represent respective axes and rotation directions around the axes. The six push buttons 641 to 646 are split up in a width direction of the second arm operating device 60 with two push buttons being provided for each of the wrist three axes. The two push buttons provided for each of the wrist three axes are split up in the lengthwise direction of the second arm operating device 60. Graphic symbols 647 to 649 that represent the positions of the respective axes of rotation are shown under the two push buttons provided for each of the wrist three axes. The operating buttons 641 and 642 correspond to (+)/(-) rotations around the axis of rotation RA4 of the fourth joint J4. The operating buttons 643 and 644 correspond to (+)/(-) rotations around the axis of rotation RA5 of the fifth joint J5. The operating buttons 645 and 646 correspond to (+)/(-) rotations around the axis of rotation RA6 of the sixth joint J6. For example, while the push button 641 is being pressed, the wrist section 4 and the hand device 3 rotate together with the fourth joint J4 around the axis of rotation RA4 in the direction indicated on the push button 641 at a predetermined speed.

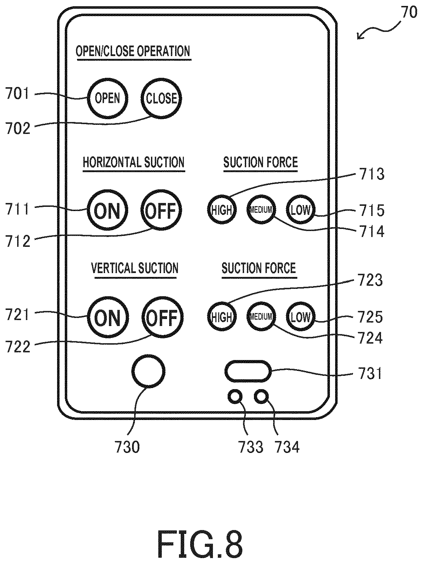

FIG. 8 is plan view illustrating an operating panel of the robot hand operating device 70 of FIG. 4. On upper part of the robot hand operating device 70, a plurality of operating buttons 701 and 702 for use to open and close the pair of grippers 34 of the hand device 3 are placed by being split up in a width direction of the robot hand operating device 70. The operating buttons 701 and 702 are labeled with words "Open" and "Close," respectively. Under the plurality of operating buttons 701 and 702, a plurality of operating buttons 711 and 712 for use to turn on and off the suction motion of the pads 36 of the grippers 34 are placed by being split up in the width direction of the robot hand operating device 70. The operating buttons 711 and 712 are labeled with words "ON" and "OFF," respectively. A plurality of selection buttons 713, 714, and 715 are placed next to the plurality of operating buttons 711 and 712 to allow the operator to select a suction force of the suction motion of the pads 36 of the grippers 34 as desired. The plurality of selection buttons 713, 714, and 715 are split up in the width direction of the robot hand operating device 70. The plurality of selection buttons 713, 714, and 715 are labeled with words ("High," "Medium," and "Low"), respectively, indicating the strength of the suction force. Under the plurality of operating buttons 711 and 712, a plurality of operating buttons 721 and 722 for use to turn on and off the suction motion of the suction pads 38 are placed by being split up in the width direction of the robot hand operating device 70. The operating buttons 721 and 722 are labeled with words "ON" and "OFF," respectively. A plurality of selection buttons 723, 724, and 725 are placed next to the plurality of operating buttons 721 and 722 to allow the operator to select a suction force of the suction motion of the suction pads 38 as desired. The plurality of selection buttons 723, 724, and 725 are split up in the width direction of the robot hand operating device 70. The plurality of selection buttons 723, 724, and 725 are labeled with words ("High," "Medium," and "Low"), respectively, indicating the strength of the suction force. A power button 731, an emergency stop button 730, an indicator lamp 733, and an indicator lamp 734 are disposed under the plurality of operating buttons 721 and 722, where the power button 731 is used to start the robot hand operating device 70, the emergency stop button 730 is used to disable the robot hand operating device 70, the indicator lamp 733 is used to notify the operator whether the robot hand operating device 70 is ON, and the indicator lamp 734 is used to notify the operator whether any operating button is pressed.

As described above, in relation to the arm mechanism of the robot system, since the second arm operating device 60 limited only to input operations of selected ones of the moving and rotating motions is provided separately from the first arm operating device 50 that covers input operations of all the motions, the operator can selectively use the operating devices according to his/her own level of proficiency in operations.

On the second arm operating device 60, since the reference coordinate system and object coordinate system for translational movement are set to the robot coordinate system and hand coordinate system, and the settings are fixedly established on operating buttons, and the object coordinate system for posture change is set to the hand coordinate system as with the object coordinate system for translational movement, the directions of the robot coordinate system and hand coordinate system can easily be seen from the shapes of the arm mechanism and hand section, and the operator can carry out input operations by visually checking all around the arm mechanism and hand section. This means that the robot coordinate system and hand coordinate system provide greater predictability about motions than do other coordinate systems, making it possible to improve operating skills in a short period of time.

Also, on the second arm operating device 60, an independent physical push button is provided for each target motion, making it possible to avoid specifying a mixture of two or more motions simultaneously and resolve a complication that would be caused if an unexpected motion different from an intended motion were performed. This is further improved by labeling the six push buttons for translational movement with words indicating respective moving directions and labeling the six push buttons for posture change with graphic symbols indicating respective rotation directions.

The six push buttons for translational movement are disposed on the upper part of the operating device while the six push buttons for posture change are disposed on the lower part of the operating device by separating all push buttons into the two groups, the four push buttons for back, forth, left, and right movements out of the six push buttons for translational movement are arranged crosswise, the two push buttons for up and down movement are placed next to the four push buttons, and furthermore, among the six push buttons for posture change, push buttons for each of the three orthogonal axes of rotation are placed side by side. This button arrangement makes it easy to identify the buttons by feeling with fingers without visually checking the operating panel, and allows accurate input operations to be performed without looking away from the arm mechanism and hand section.

While the embodiments of the present invention have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

### [Reference Signs List]

50...first arm operating device, 60...second arm operating device, 70...robot hand operating device, 100...control device, 101...system control section, 102...first arm operating device interface, 103...second arm operating device interface, 104...robot hand operating device interface, 105...driver unit interface, 106...motion control section

## Claims

1. A robot system comprising:
a robot arm mechanism including a plurality of joints, and being equipped with an end effector at a tip;
an operating device for operating a movement and a posture change of the end effector; and
a control section for controlling the joints according to the input operation carried out via the operating device, wherein
the operating device equips a first operating button set and a second operating button set, the first operating button set is adapted for operating translational movement in which the end effector moves in positive and negative directions along each of three orthogonal axes of the robot coordinate system with a posture of the end effector on a robot coordinate system of the robot arm mechanism fixed, the second operating button set is adapted for operating posture change motion in which the end effector rotates in positive and negative directions around each of three orthogonal axes of the hand coordinate system with an origin position of a hand coordinate system of the end effector on the robot coordinate system fixed.

2. The robot system according to claim 1, further comprising another operating device for use by the operator to carry out an input operation concerning another movement different from the translational movement in addition to the translational movement and another posture change different from the posture change in addition to the posture change.

3. The robot system according to claim 1, wherein the first operating button set is made up of six physical push buttons for use to carry out an input operation concerning positive and negative movements along each of the three orthogonal axes of the robot coordinate system.

4. The robot system according to claim 3, wherein the second operating button set is made up of six physical push buttons for use to carry out an input operation concerning positive and negative rotations around each of the three orthogonal axes of the hand coordinate system.

5. The robot system according to claim 4, wherein the six push buttons of the first operating button set are labeled with words indicating respective moving directions and the six push buttons of the second operating button set are labeled with graphic symbols indicating respective rotation directions.

6. The robot system according to claim 5, wherein:
the six push buttons of the first operating button set are disposed on upper part of the operating device, four push buttons for back, forth, left, and right movements on the robot coordinate system out of the six push buttons of the first operating button set are arranged crosswise close to one another, and two push buttons for up and down movement on the robot coordinate system are placed close to each other next to the four push buttons; and
the six push buttons of the second operating button set are placed in lower part of the operating device, and among the six push buttons of the second operating button set, push buttons for each of the three orthogonal axes of the hand coordinate system are placed close to each other.

7. The robot system according to claim 1, further comprising another operating device that includes an operating button set for individual input for the plurality of joints, the first and second operating button sets, a button set for a motion in which the end effector moves in positive and negative directions along each of three orthogonal axes of a coordinate system different from the coordinate system for the first operating button set, and a button set for a motion in which the end effector rotates in positive and negative directions around each of three orthogonal axes of a coordinate system different from the coordinate system for the second operating button set.

8. The robot system according to claim 1, wherein the robot arm mechanism includes a base, a joint for torsional rotation around a first axis corresponding to an approximate center line of the base, a joint for bending rotation around a second axis orthogonal to the first axis, a joint for linear extension and retraction along a third axis orthogonal to the second axis, and a joint making up wrist three axes.

9. A robot system comprising:
a robot arm mechanism including a plurality of joints, and being equipped with an end effector at a tip;
an operating device for operating a movement and a posture change of the end effector; and
a control section for controlling the joints according to the input operation carried out via the operating device, wherein
the operating device equips a first operating button set and a second operating button set, the first operating button set is adapted for operating translational movement of the end effector, the second operating button set is adapted for operating a posture change of the end effector, a reference coordinate system and an object coordinate system for translational movement are fixedly associated with the first operating button set, a reference coordinate system and an object coordinate system for the posture change are fixedly associated with the second operating button set, and the reference coordinate system and the object coordinate system for the posture change are identical to the reference coordinate system and the object coordinate system for the translational movement.
